# EUROPÄISCHE PATENTSCHRIFT

(11) **EP 1 468 853 B1**
(45) Veröffentlichungstag und Bekanntmachung des Hinweises auf die Patenterteilung: **09.03.2011**
(21) Anmeldenummer: 04014075.8
(22) Anmeldetag: 01.02.2001
(51) Int. Cl.: B60J 1/20, B60J 3/02

(54) **Seitenfensterrollo**
Roller blind for side windows
Store à enrouleur pour vitres latérales

(30) Priorität: 09.02.2000 DE 10005970
(43) Veröffentlichungstag der Anmeldung: 20.10.2004
(62) Teilanmeldung aus: 01102306.6
(73) Patentinhaber: BOS GmbH & Co. KG, 73760 Ostfildern (DE)
(72) Erfinder: Schlecht, Werner, 71665 Vaihingen / Enz-Aurich (DE); Seel, Holger, 71134 Aidlingen (DE); Walter, Herbert, 73061 Ebersbach (DE)
(74) Vertreter: Rüger, Barthelt & Abel Patentanwälte

(56) Entgegenhaltungen:
- DE-C1- 4 320 467
- GB-A- 2 297 529
- US-A- 5 379 822
- US-A- 5 404 926
- US-A- 5 595 229
- US-A- 5 810 065
- US-A- 6 047 762

## Beschreibung

Für die hintere Heckscheibe von PKW sind eine Vielzahl von Lösungen bekannt, um ein dort befindliches Fensterrollo elektrisch fernbedient aus- und einzufahren.

Eine Lösung ist beispielsweise in EP-B-0 240 747 gezeigt, bei der zum Aufspannen lediglich biegesteife Hebel verwendet werden. Das bekannte Heckscheibenrollo weist einen Sockel auf, in dem eine Wickelwelle drehbar gelagert ist. Die Wickelwelle ist mit Hilfe eines Federmotors in Aufwickelrichtung einer Rollobahn vorgespannt, die an der Wickelwelle mit einer Kante angebracht ist. Die andere Kante ist mit einer Zugstange verbunden, an der zwei einarmige Hebel angreifen, die an dem Sockel gelagert sind. Die Lagerachsen der Hebel verlaufen rechtwinkelig zu der zwickelwelle. Beim Aufrichten der Hebel wird die Rollobahn von der Wickelwelle abgezogen.

Sonnenlicht tritt bei PKWs jedoch nicht nur durch die Heckscheibe ein, sondern auch durch die Seitenscheiben, wobei die Fondpassagiere dem über die Seitenscheiben hereinfallende Licht im allgemeinen noch häufiger ausgesetzt sind, weil die Fensterkante keine ausreichenden Schatten wirft, da die Fensterkanten der Seitenscheiben den Fondpassagieren unmittelbar benachbart ist.

Es besteht deswegen ein Bedarf an einem einfach zu bedienenden Rollo für die Seitenfenster, insbesondere für die hinteren Seitenfenster.

Allerdings ist das Seitenfensterrollo hinsichtlich seiner mechanischen Gestaltung wesentlich komplizierter als ein Heckscheibenrollo, bei dem die Rollobahn im allgemeinen eine symmetrischen, trapezförmigen oder rechteckigen Zuschnitt hat. Für die Seitenfenster können solche einfachen Zuschnitte nicht verwendet werden, da die Kontur des Seitenfensters relativ kompliziert ist und zweckmäßigerweise die gesamte Fensterfläche abgeschattet werden soll.

Die US 5,810,065 zeigt ein Rollo für Kraftfahrzeuge. Zu dem Rollo gehören zwei seitlich des Fensters verlaufende Führungsschienen sowie eine oberhalb des Fensters drehbar gelagerte Wickelwelle. An der Wickelwelle ist mit einer Kante eine Rollobahn befestigt, deren freie bewegliche Kante mit einem Zugspriegel verbunden ist. Der Zugspriegel ist endseitig in den beiden Führungsschienen geführt.

In den beiden Führungsschienen laufen als Muttern ausgebildete Gleiter, die mit dem Zugspriegel verbunden sind. Zum Bewegen der Gleiter führt durch jeden Gleiter eine Gewindespindel hindurch, die in der zugehörigen Führungsschiene drehbar gelagert ist. Das untere Ende jeder Gewindespindel trägt ein Kegel zahnrad. Jedes der beiden Kegelzahnräder kämmt mit einem weiteren Kegelzahnrad, so dass an jedem Ende einer Gewindespindel ein Winkelgetriebe vorhanden ist. Die beiden antreibenden Kegelräder sitzen auf einer gemeinsamen Welle, die über einen Getriebemotor angetrieben wird. Durch Ingangsetzen des Getriebemotors werden die Gewindespindeln in den Führungsschienen synchron und mit gleicher Drehzahl in Umdrehungen versetzt und bewegen den Betreffenden Gleiter entweder auf die Wickelwelle zu oder von der Wickelwelle weg.

Um die Rollobahn zwischen der Wickelwelle und dem Zugspriegel gespannt zu halten, ist in der Wickelwelle ein Federmotor vorgesehen.

Die bekannte Anordnung ist nur für solche Fenster geeignet, bei denen die Ober- und die:Unterkante des Fensters parallel zueinander verlaufen, weil der Hub an beiden Enden des Zugspriegels gleich ist.

Ausgehend hiervon ist es Aufgabe der Erfindung ein elektrisch bedienbares Seitenfensterrollo zu schaffen, das sich gut für Fenster eignet, bei denen die Oberkante und die Unterkante nicht parallel zueinander verlaufen.

Bei dem erfindungsgemäßen Seitenfensterrollo ist eine drehbar gelagerte Wickelwelle vorgesehen, an der mit einem Randabschnitt der Zuschnitt der Rollobahn befestigt ist. An einem von diesem Abschnitt anderen abliegenden Abschnitt des Rollobahn greift ein Betätigungselement an, um die Rollobahn von der Wickelwelle abzuziehen und im aufgespannten Zustand zu halten. Zum Ein- und Ausfahren der Rollobahn werden kraftbetätigte Antriebsmittel verwendet. Das Antriebsmittel weist zwei getrennte Zahnräder auf, die mit unterschiedlichem Durchmesser versehen sind, wodurch unterscheidlichen Hubhöhen Rechnung getragen wird.

Im eingefahrenen Zustand ist es dann praktisch vollständig hinter die Umrisse des Fensters zurückgezogen acu dann wenn die Fensteroberkante schräg zu der Fensteruntekante verläuft.

Zumindest an einem Ende sind die linienförmigen Betätigungsglieder mit einer Art Verzahnung versehen, mit der sie formschlüssig in das jeweilige Ausgangszahnrad des Antriebsmotors eingreifen. Derartige Betätigungsglieder sind unter der Handelsbezeichnung "SU-flexwelle" kommerziell verfügbar und bestehen aus einem in Längsrichtung verlaufenden Drahtkern, auf dessen Außenumfangsfläche ein ebenfalls aus einem Draht gebildete Schraube aufgebracht ist. Der Abstand zwischen benachbarten Windungen der Schraube entspricht der Dicke des Zahns des Antriebszahnrads. Um Klappergeräusche zu vermeiden, können zwischen den Drahtwindungen der Schraube Borsten vorhanden sein, die der Anordnung das Aussehen einer Flaschenbürste geben.

Die Wickelwelle ist etwa parallel zur Unterkante des Seitenfenstern angeordnet sein.

Die Anbringung der Wickelwelle unterhalb der unteren Fensterrahmenkante gestattet es darüber hinaus, die Wickelwelle in jenem Bereich der Tür unterzubringen, der bei heutigen Fahrzeugen ohnehin viel leeres Volumen innerhalb der Tür bereitstellt.

Um die Rollobahn im aufgespannten Zustand flatter- und schwingungsfrei zu halten können als Betätigungsmittel im Wesentlichen beigesteife Schubglieder zu verwenden, um die Rollobahn von der Wickelwelle abzuziehen. Die Schubglieder greifen an derjenigen Kante der Rollobahn an, die beim Ein-und Ausfahren den größten Weg zurücklegt. Dabei wird zumindest während des Abwickelvorgangs die Vorderkante der Rollobahn ausschließlich durch die Schubglieder geführt und in Querrichtung gehalten. Die Schubglieder müssen deswegen zumindest in Richtung senkrecht zu einer Ebene, die von der aufgespannten Rollobahn definiert ist, hinreichend beigesteif sein. In Richtung parallel dazu wird die Führung weitgehend durch die Rollobahn selbst in Verbindung mit der Vorspannung erbracht, weshalb in dieser Richtung eine besondere Biegesteifigkeit nicht unbedingt erforderlich ist.

Im vollständig aufgespannten Zustand kann die Oberkante des Rollobahnzuschnittes in hakenförmigen Taschen aufgenommen sein. Diese verhindern, Schwingungen der Oberkante der aufgespannten Rollobahn durch die Fahrzeugerschütterungen. Solche Schwingungen lassen sich auch weitgehend vermeiden, wenn die Schubglieder derart gerichtet sind, dass die Oberkante der Rollobahn beim Ausfahren auf der Innenseite der Scheibe entlang gleitet, weil sie an die Scheibe angedrückt wird.

Eine sehr stabile Führung der Rollobahn ergibt sich, wenn die Rollobahn zwischen zwei Führungsschienen geführt wird, die ausgehend von der Wickelwelle etwa in die gleiche Richtung verlaufen. Da diese Führungsschienen wegen der Seitenfenstergeometrie nicht zueinander parallel verlaufen, enthält die Rollobahn zumindest einen Spriegel, der längenverstellbar ist. Er passt sich damit selbstätig dem sich verändernden Abstand zwischen den Führungsschienen an.

Um die Betätigung und Steuerung der Rollobahn möglichst einfach zu gestalten, umfassen die Antriebsmittel des erfindungsgemäßen Seitenrollos neben dem Elektromotor noch Federmittel. Zwischen dem Elektromotor und den Federmitteln liegt kinematisch die Rollobahn, wobei der Antriebsmotor die Position der Ober- oder Seitenkante der Rollobahn definiert, während die Federmittel als "Slave-Antrieb" für die Vorspannung in der Rollobahn sorgen.

Der Elektromotor kann mit jenem Teil der Rollobahn zusammenwirken, der beim Ausfahren den größten Weg zurücklegt, während die Federmittel jeweils am anderen Ende der Rollobahn angreifen.

Der Federmotor kann in der Wickelwelle sitzen.

Im übrigen sind Weiterbildungen der Erfindung Gegenstand von Unteransprüchen.

Die zeichnungen zeigen:
Fig. 1 den Fondbereich einer Limousine, mit Blick auf die Innenseite der hinteren, rechten Tür, in einer aufgebrochenen perspektivischen Darstellung,
Fig. 2 die hintere, rechte Seitentür nach Fig. 1, in einer teilweise aufgebrochenen Darstellung,
Fig. 3 wesentliche Funktionsteile des Seitenrollos gemäß Fig. 2, in einer perspektivischen, schematischen Darstellung, und

Fig. 4 ein erfindungsgemäßes Ausführungsbeispiel des Seitenrollos ohne Führungsschienen, in einer stark schematisierten Darstellung einer Seitentür mit ausgebrochener Innerverkleidung.

In der nachfolgenden Figurenbeschreibung werden Begriffe wie "vorne", "hinten", "oben" oder "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicher Weise gebraucht werden.

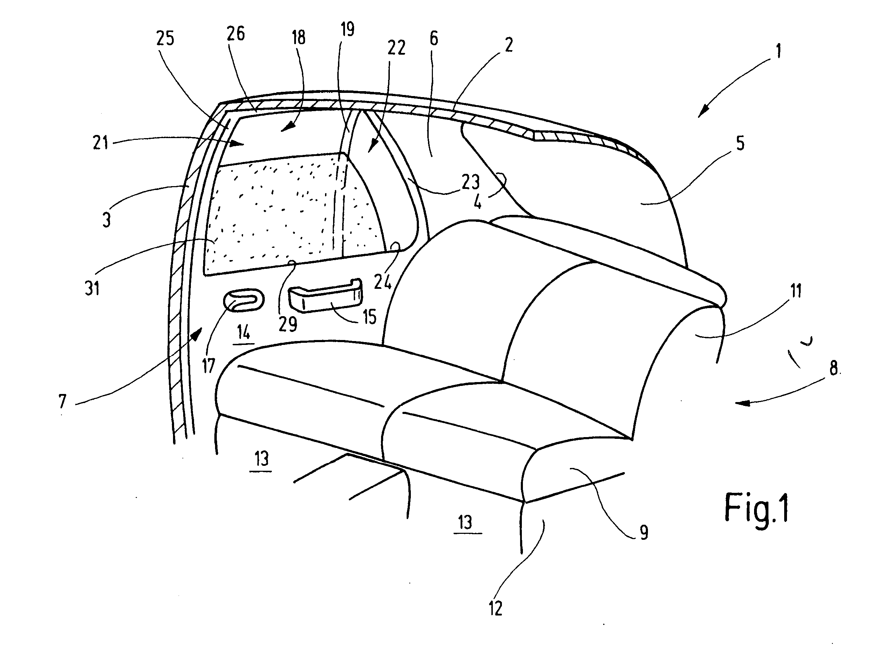

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Die dem Innenraum zugekehrte Innenseite der Seitentür 7 ist mit einer Innenverkleidung 14 versehen, an der ein Türgriff 15 befestigt ist und in dem eine Betätigungsklinke 17 eingelassen ist, um das Schloss der Seitentür 7 zu öffnen.

Die Seitentür 7 enthält oberhalb der Innenverkleidung 14 eine Fensteröffnung 18, die durch einen Zwischensteg 19 in zwei Abschnitte 21 und 22 aufgeteilt ist. Der Abschnitt 22 hat eine etwa dreieckförmige Gestalt und wird nach vorne von dem Zwischensteg 19 nach hinten durch einen hinteren Rahmenabschnitt 23 der Tür sowie einen unteren Fensterrahmenabschnitt 24 begrenzt. In dem Seitenfensterausschnitt 22 ist eine Fensterscheibe fest und unbeweglich eingesetzt.

Der Fensteranschnitt 21 hat eine im weitesten Sinne rechteckige Gestalt. Er wird nach vorne durch einen vorderen Rahmenabschnitt 25, nach oben durch einen oberen Rahmenabschnitt 26, nach hinten durch den Zwischensteg 19 und unten durch den bereits erwähnten unteren Fensterrahmenabschnitt 24 begrenzt. Der vordere Rahmenabschnitt 25 sowie der Zwischensteg 19 enthalten in bekannter Weise Führungsschienen, in denen eine Seitenfensterscheibe verschieblich geführt ist. Der Zwischensteg 19, der von dem oberen Rahmenabschnitt 26 bis zu dem unteren Fensterrahmenabschnitt 24 reicht, verläuft deswegen im Wesentlichen parallel zu dem vorderen Rahmenabschnitt 25, zumindest parallel zu der dort vorhanden Führungsschiene.

Die Seitenfensterscheibe ist in der Fig. 1 nicht zu erkennen. Diese Fensterscheibe ist in der bekannten Weise zwischen der äußeren Blechhaut der Seitentür und der inneren Türschale versenkbar. Es sind ihr auch Antriebsmittel zugeordnet, um die Fensterscheibe auf- und ab zu bewegen.

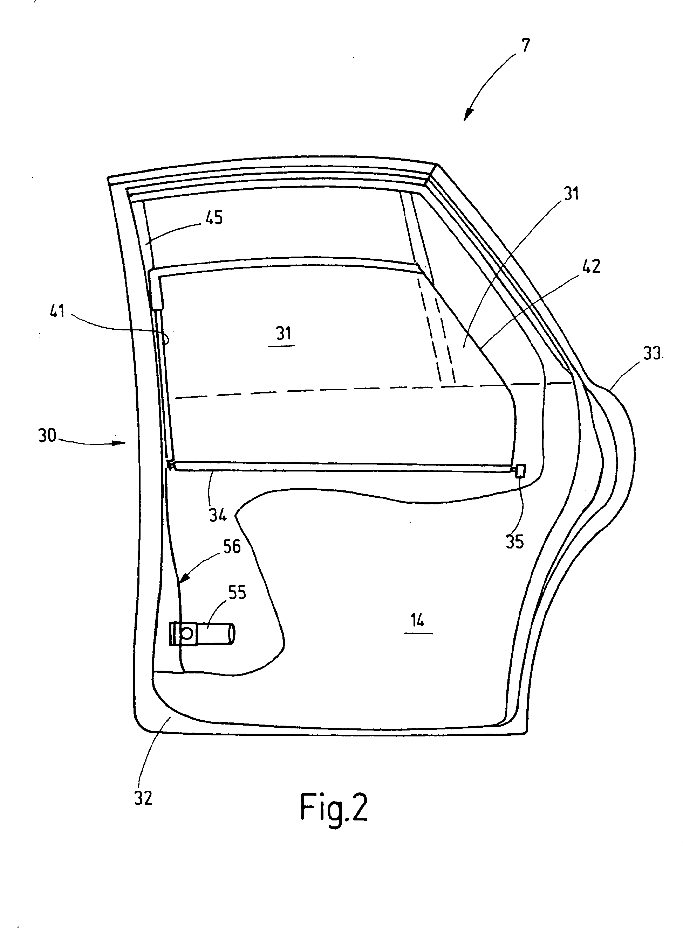

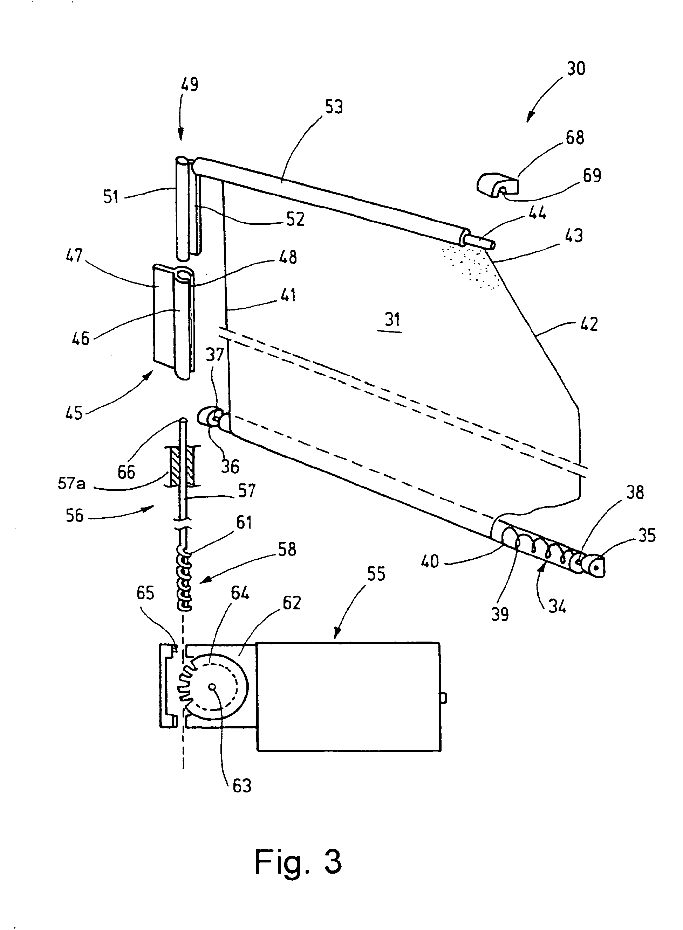

Die Seitentür 7 ist mit einem, in den Figuren 2 und 3 im Einzelnen dargestellten, Seitenfensterrollo 30 versehen, dessen Rollobahn 31 in den Darstellungen der Figuren 1 und 2 teilweise ausgefahren ist, um so den Fondbereich der Fahrgastzelle gegen seitliche Sonneneinstrahlung zu schützen. Die Rollobahn 31 läuft durch einen neben oder unterhalb des unteren Fensterrahmenabschnitts 24 vorhandenen Schlitz 29 heraus, der sich in der Innenverkleidung 14 oder zwischen der Innenverkleidung 14 und der Türinnenschale befindet.

In Fig. 2 ist die Seitentür 7 gesondert veranschaulicht. Es sind in Fig. 2 ein umlaufender Türfalz 32, Abschnitte der aus Blech bestehenden Türaußenhaut 33 sowie die aufgebrochen gezeigte Innenverkleidung 14 zu erkennen, die sich auf der Innenschale der Tür 7 befindet. Dort ist ein nicht zu der Erfindung gehöriges Seitenfensterrollo 30 vorhanden.

Zu dem Seitenfensterrollo 30 gehört eine Wickelwelle 34, die unterhalb der Fensterunterkante 32 hinter der Innenverkleidung 14 auf der Tür 7 gelagert ist. Dazu trägt die Tür 7 im Abstand von einander zwei Lagerböcke 35 und 36 die Lagerzapfen 37 und 38 aufnehmen, die axial aus der rohrförmigen wickelwelle 34 hervorstehen. In der Wickelwelle 34 befindet sich ein schematisch gezeigter Federmotor 39, der bei 40 mit der Wickelwelle 34 fest verbunden ist und dessen anderes Ende drehfest an den Lagerzapfen 38 angekoppelt ist. Der Lagerzapfen 38 wiederum sitzt drehfest im den Lagerbock 35. Der Federmotor 39 bildet einen Teil der Antriebseinrichtung des Seztenfensterrollos 30 und erzeugt eine Vorspannkraft im sinnes eines Aufwickeln der Rollobahn 31 auf die Wickelwelle 34. Hierzu ist die Rollobahn 31 an der Wickelwelle 34 beispielsweise mittels eines Keders in bekannter Weise befestigt.

Die Rollobahn 31 besteht aus einem Zuschnitt aus einer Kunststofffolie, die ausreichend das Sonnenlicht abschirmt. Die Außenkontur entspricht der Außenkontur der Fensteröffnung 18, d.h. der Summe der beiden Fensteröffnungen 21 und 22.

Die Rollobahn 31 wird von einer in Fahrtrichtung liegenden vorderen geraden Kante 41, einer hinteren konturierten Kante 42 sowie einer oberen Kante 43 und einer an der Wickelwelle 34 befestigten, nicht erkennbaren Kante, begrenzt.

An der oberen Kante 43 ist eine beispielsweise aus einem Kunststoffprofil bestehende Randverstärkungsleiste 44 angebracht, die von der Hinterkante 42 bis zu der Vorderkante 41 reicht.

Zu dem Seitenfensterrollo 30 gehört ferner eine Führungsschiene 45, die an der Tür 7 im Bereich des vorderen Fensterrahmenabschnittes 25 befestigt ist und von dem oberen Fensterrahmenabschnitt 26 bis in das Innere der Tür 7 reicht.

In Fig. 3 ist lediglich ein Abschnitt zu erkennen. Die Führungsschiene 45 setzt sich aus einem C-förmigen Profil mit einer hintergriffigen Führungsnut 46 und einem angeformten leistenförmigen Befestigungsflansch 47 zusammen. Die Führungsnut 46 öffnet sich an einem Schlitz 48, der dem Flansch 47 gegenüber liegt und von dem Flansch 47 weg zeigt.

In der Führungsschiene 45 läuft ein Schlitten 49, bestehend aus einem im Querschnitt an den Innenraum der Führungsnut 46 angebrachten Grundkörper 51, von dem ein leistenförmiger Flansch 52 ausgeht, der durch den Schlitz 48 nach außen ragt. Im einfachsten Falle ist der Grundkörper 51 im Wesentlichen zylindrisch und der Innenraum der Führungsnut 46 der Führungsschiene 45 ebenfalls zylindrisch.

An dem Flansch 52 ist ein Ausleger 53 befestigt, der von dem Grundkörper 51 im Wesentlichen rechtwinkelig weg steht und seinerseits die Form einer Führungsschiene hat, in der die Randverstärkungsleiste 44 längs verschieblich aufgenommen ist. Der Ausleger 53 ist in der Weise gestaltet, dass die Randverstärkungsleiste 44 lediglich einen Freiheitsgrad hat, nämlich in Richtung parallel zur Längserstreckung des Auslegers 43. In Richtung senkrecht dazu ist sie in dem Ausleger 53 gefesselt.

Um das Seitenfensterrollo 30 wahlweise ein- und auszufahren, gehört zu der Antriebseinrichtung neben dem Federmotor 39 ein Getriebemotor 55, der über ein Betätigungs-. glied 56 mit dem Schlitten 49 gekoppelt ist. Das Betätigungsglied 56 wird von einem drucksteifen, linienförmigen Element, beispielsweise einem flexiblen Metall- oder Kunststoffdraht 57, der Seele eines Bowdenzugs oder einer schubsteifgeführten, verseilten Drahtlitze gebildet. Zu-. mindest an dem motorseitigen Ende trägt das Betätigungsglied 56 auf seiner Außenumfangsfläche eine eine Schraube oder Schnecke 58 bildende Drahtwicklung 61, die unverschiebbar mit dem Betätigungsglied 56 verbunden ist. Betätigungsglieder dieser Art sind auch unter der Handelsbezeichnung "SU-flexwelle" verfügbar und werden unter anderem bei Fensterhebern eingesetzt.

Der Antriebsmotor 55 ist ein permanent erregter Gleichstrommotor, dem ein Untersetzungsgetriebe 62 nachgeordnet ist. Auf einer Ausgangswelle 63 des Getriebes 62 sitzt drehfest ein Stirnzahnrad 64, dessen Teilung mit der Teilung der Schnecke oder Schraube 58 übereinstimmt.

Neben dem Stirnzahnrad 64 befindet sich in dem Gehäuse des Getriebes 62 eine Führung 65, die derart gestaltet ist, dass sie die Schraube 58 des Betätigungsgliedes 56 tangential zu dem Ausgangszahnrad 64 führt und erzwingt, dass die Zähne des Stirnzahnrades 64 formschlüssig zwischen den Windungen der Schraube 58 eingreifen können.

Das Betätigungsglied 56 verbindet das Stirnzahnrad 64 getrieblich mit dem Schlitten 51, und zwar wird es ausgehend von dem Getriebe 62 bzw. der dort vorhanden Führung 65 drucksteif in einer Hülle 57a bis zum unteren Ende der Führungsschiene 45 geführt. An dieser Stelle tritt das Betätigungsglied 56 in den Innenraum der Führungsnut 46 ein. Das freie Ende 66 des Betätigungsgliedes 56 liegt frei anstoßend am unteren Ende des Führungsschlittens 51 an.

Im eingebauten Zustand sind bei geöffneten Seitenfensterrollo 30 praktisch keine Teile von diesem zu erkennen. Die Führungsschiene 45 verläuft neben der Fensterführung und verschwindet somit weitgehend in der Fensterrahmenverkleidung der Tür 7. Lediglich der Ausleger 53 wäre in einem Schlitz 29 zu erkennen, der einerseits von der Innenverkleidung 14 und andererseits von dem unteren Fensterrahmenabschnitt 24 begrenzt ist und durch den aus dem Türinneren das Seitenfensterrollo 30 ausgefahren wird.

Die Handhabung und Funktionsweise des beschrieben Seitenfensterrollos ist wie folgt:

Im Ruhezustand ist die Rollobahn 31 unter der Wirkung des Federmotors 38 auf die Wickelwelle 34 aufgewickelt. Der Schlitten 51 ist in der Führungsschiene 45 nach unten gefahren, soweit bis der Ausleger 53 den zuvor erwähnten Rolloschlitz 29 entsprechend der Länge des Auslegers 43 ausfüllt.

Wenn der Benutzer ausgehend von dieser Betriebsstellung das Seitenfensterrollo 30 ausfahren will, setzt er über einen nicht weiter gezeigten elektrischen Schalter den Antriebsmotor 55 in Gang und zwar in einer solchen Drehrichtung, dass das Stirnzahnrad 64 das drucksteife bzw. drucksteif geführte Betätigungsglied 56 in Richtung auf die Führungsschiene 45 vorschiebt. Bei dieser Vorschubbewegung drückt das in dem Innenraum der Führungsschiene 45 geführte Betätigungsglied 56 den Führungsschlitten 49 zusammen mit dem daran befestigten Ausleger 53 nach oben in Richtung auf den oberen Fensterrahmenabschnitt 26. Dabei wird entsprechend Rollobahn 31 von der Wickelwelle 34 abgewickelt und durch den Rolloschlitz 29 in der Tür 7 nach oben herausgezogen.

Sobald der Schlitten 49 am oberen Ende der Führungsschiene 45 angekommen ist und an entsprechende Begrenzungsanschläge anstößt, steigt der Motorstrom an, was in bekannter Weise von einer an sich bekannten Überwachungsschaltung ausgewertet wird, um unabhängig von der Schaltersteuerung durch den Benutzer den Antriebsmotor 55 stromlos zu schalten. Die Anordnung sorgt in bekannter Weise ferner dafür, ein Wiedereinschalten des Motorstroms nur für die umgekehrte Drehrichtung zuzulassen.

Die Rollobahn 31 ist nunmehr vollständig ausgefahren und der Ausleger 53 stößt an der oberen Fensterrahmenkante 26 an. Vor der gesamten Fensterfläche ist die Rollobahn 31 aufgespannt.

Selbst wenn der Winkel zwischen der Führungsschiene 45 und der Achse der Wickelwelle 34 nicht 90°beträgt, können in der Rollobahn 31 keine Verspannungen auftreten, weil die Randverstärkungsleiste 44 sich in dem Ausleger 53 zumindest ein Stück weit längsverschieblich bewegen kann.

Ein Schwingen des Auslegers 53 läßt sich bei ausgefahrenen Seitenfensterrollo 30 vermeiden, wenn entsprechend der oberen Endstellung an der Innenseite der Tür 7 eine hakenförmige Tasche 68 befestigt wird, die ein nach unten offene Nut 69 enthält. Die Nut 69 nimmt in der oberen Endstellung den Ausleger 43 an einer Stelle auf, die von dem Schlitten 51 beabstandet ist. Pendelbewegungen des Auslegers 53 um die Längsachse des Schlittens 49 sind dadurch mit Sicherheit ausgeschlossen.

Zum Einfahren des Seitenfensterrollos 30 setzt der Benutzer den Elektromotor 55 über einen entsprechenden Schalter in der entgegengesetzten Drehrichtung in Funktion. Das Stirnzahnrad 54, das mit der Schraube 58 kämmt, zieht das Betätigungsglied 56 nach unten aus der Führungsschiene 45 zurück, wodurch die gegen den Schlitten 49 wirkende Vorschubkraft nachlässt. Der Federmotor 38 ist dadurch in der Lage entsprechend dem Zurückweichen des Betätigungsgliedes 56 die Rollobahn 31 wieder auf die Wickelwelle 34 aufzuwickeln.

Die untere Endstellung des Betätigungsgliedes kann in ähnlicher weise abgefragt werden, wie die obere Endstellung, und in entsprechender Weise stillgesetzt werden.

Ersichtlicherweise wird die Rollobahn 31 durch die Wirkung des Federmotors 38 gespannt gehalten, während die Position durch den selbsthemmend wirkenden Antriebsmotor 55 vorgegeben wird.

Wie sich aus der Erläuterung ergibt, könnte der Federantrieb 39 mit dem Antriebsmotor 55 auch die Plätze tauschen, in der Weise, dass der Antriebsmotor 55 die wickelwelle 34 formschlüssig antreibt, während das Betätigungsglied 56 durch eine Druckfeder beaufschlagt oder eine solche ersetzt wird. Bei einer derartigen Seitenfensterrolls Würde der Schlitten 51 in Abwickelrichtung vorgespannt werden, während die Rollobahn 31 gegen die Wirkung der Feder auf der Wickelwelle 38 aufgewickelt wird.

Es wäre schließlich auch denkbar, als Betätigungsglied 56 ein Seil zu verwenden, das einends an dem Schlitten 49 befestigt ist und anderenends an einer Zugfeder. Die Zugfeder würde über das Seil ebenfalls bestrebt sein, den Schlitten 49 nach oben zu ziehen, wobei die Bewegung durch das Zusammenspiel der Wickelwelle 34 mit dem Antriebsmotor 55 gehemmt bzw. freigegeben würde.

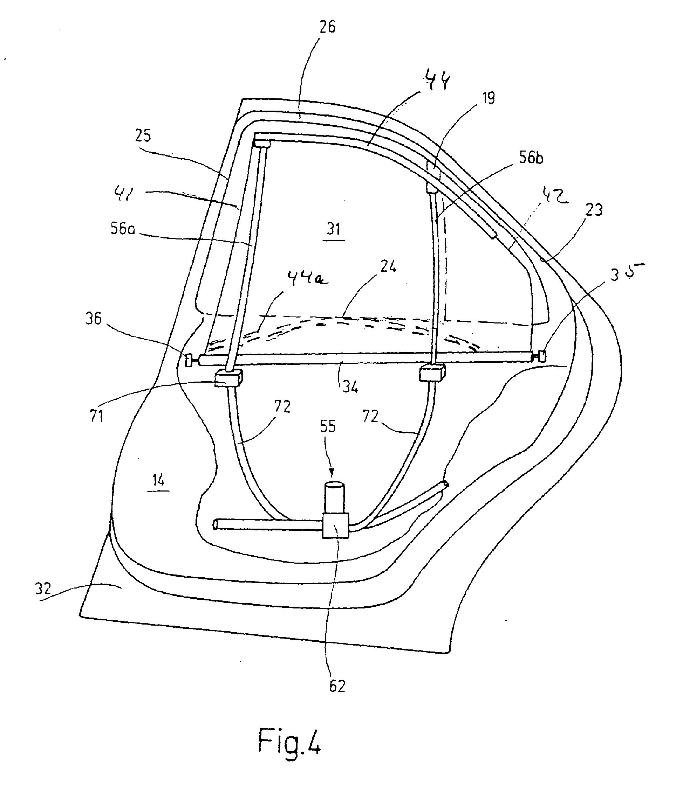

Bei dem zuvor beschriebenen Seitenfensterrolls weist das Seitenfensterrollo 30 eine einzige Führungsschiene 45 auf. In Fig. 4 ist stark schematisiert ein Ausführungsbeispiel gezeigt, bei dem Seitenfensterrollo 30 frei von Führungsschienen ist.

Wie zuvor ist unterhalb der unteren Fensterrahmenkante 24 hinter der Innenverkleidung 14, die Wickelwelle 34 drehbar gelagert. An ihr ist mit einer Kante, wie zuvor beschrieben, die Rollobahn 31 befestigt, deren Zuschnitt etwa wie in Fig. 3 gezeigt gestaltet ist.

Unterhalb der wickelwelle 34 sind an der Tür 7 im Abstand zu einander zwei Gleitführungsblöcke 71 befestigt. Aus jedem der Gleitführungsblöcke 71 tritt nach oben ein drucksteifes und verhältnismäßig biegesteifes zylindrisches Betätigungsglied 56a und 56b aus. Die unteren Enden der beiden Betätigungsglieder 56a und 56b sind in der gleichen weise gestaltet, wie dies im Zusammenhang mit Fig. 3 erläutert ist und sie laufen durch Führungsrohre 72 ausgehend von den Gleitführungsblöcken 71 zu dem Antriebsmotor 55 und in dessen Getriebe 62. Da beide Betätigungsglieder 56 durch dasselbe Stirnzahnrad 64 angetrieben werden, laufen sie zwangsläufig mit derselben Geschwindigkeit und demselben Hub, d.h. exakt synchron zueinander.

Das Betätigungsglied 56b liegt vor dem Zwischensteg 19.

Die freien Enden der Betätigungsglieder 56a und 56b sind unmittelbar mit der Verstärkungsleiste 44 verbunden.

Beim Ausfahren drücken die Betätigungsglieder die Verstärkungsleiste 44 nach oben und wickeln dadurch gegen die Wirkung des Federmotors in der Wickelwelle 34 die Rollobahn von der Wickelwelle 34 ab.

Der aus den Gleitführungsblöcken 71 austretende Teil der Betätigungsglieder 56a und 56b ist ein verhältnismäßig steifer Kunststoff oder Metalldraht, der einerseits dem bogenförmigen Verlauf der Führungsrohre 72 folgen kann, andererseits aber in der Lage ist, die Verstärkungsrandleiste 44 der Rollobahn 31 zu tragen.

Die freien Enden der Betätigungsglieder 56a und 56b sind unlösbar mit der Randverstärkungsleiste 44 verbunden.

Da die Randverstärkungsleiste 44 bei dem gezeigten Ausführungsbeispiel verhältnismäßig stark gekrümmt verläuft und nicht auf der Wickelwelle 34 aufgewickelt werden kann, sitzt die Wickelwelle 34 gegenüber der unteren Fensterkante 24 zurückversetzt. Der Versatz hat die Länge einer Projektion der Enden der Randverstärkungsleiste 44 auf eine Gerade, die rechtwinkelig zu der Wickelwelle 34 und in der Ebene der Rollobahn 31 liegt.

Die Funktion des erfindungsgemäßen Seitenfensterrollos 30 nach Fig. 4 ist ähnlich wie bei dem zuvor erläuterten Seitenfensterrollo 30 nach den Figuren 1 bis 3. Der einzige Unterschied besteht darin, dass die Randverstärkungsleiste 44 ausschließlich durch die Betätigungsglieder 56a und 56b getragen und geführt wird. Es versteht sich, dass diese Betätigungsglieder 56 im ausgefahrenen Zustand parallel zu einander verlaufen.

Damit im ausgefahrenen Zustand die obere Kante der Rollobahn 31 aufgrund der unweigerlich auftretenden Erschütterungen nicht in Schwingungen gerät, können ein oder zwei Aufnahmetaschen 68 vorgesehen werden, wie sie in Fig. 3 gezeigt und in Verbindung mit Fig. 3 auch beschrieben wurden.

Das Aufwickeln der Rollobahn 31 auf der Wickelwelle 34 geschieht wie oben beschrieben beispielsweise mit Hilfe eines in der Wickelwelle 34 untergebrachten Federmotors.

Wenn die Oberkante der Rallobahn 31 entsprechend der Gestalt des Fensters stark gekrümmt ist, wird die Wickelwelle 34 entsprechend weit unten in der Tür 7 untergebracht. Der Abstand der Wickelwelle 34 von der Fensterunterkante 24 bemisst sich wie folgt:

Die Enden der Verstärkungsleiste 44 werden auf eine Gerade projiziert, die in der Ebene der Rollobahn 31 liegt und auf der Wickelwelle 34 senkrecht steht. Die hierdurch auf diese Gerade abgezeichnete Strecke ist das Maß, um das die Wickelwelle 34 unterhalb der Fensterkante 24 vertieft wird.

Sollte dieser Abstand zu groß sein, besteht auch die Möglichkeit, die Rollobahn 31 auf der Wickelwelle 34 kegelstumpfförmig aufzuwickeln, d.h. dafür zu sorgen, dass jene Rollobahnkante, bei der das jeweilige Ende der Verstärkungsleiste 44 den größten Abstand von der Wickelwelle 34 hat, auf einem größeren Durchmesser der Wickelwelle 34 aufgewickelt wird, verglichen mit der gegenüberliegenden Kante, bei der der Abstand zwischen dem freien Ende der Verstärkungsleiste 44 und der Wickelwelle 34 kleiner ist. Die die beiden Betätigungsglieder 56a und 56b müssen hierbei unterschiedliche Strecken zurücklegen. Sie müssen, ausgehend von der Startposition, nach der gleichen Zeit die obere Endlage erreichen, was bedeutet, dass sie sich mit unterschiedlichen Geschwindigkeiten bewegen müssen.

Die Geschwindigkeiten stehen in einem festen konstanten Verhältnis zueinander. Sie lassen sich realisieren, indem der Getriebemotor 55 für die beiden Betätigungsglieder 56a und 56b getrennte Zahnräder, ähnlich dem Zahnrad 64, nach Fig. 3 bekommt, deren Durchmesser an die unterschiedlichen Relativgeschwindigkeiten angepasst ist.

Im eingefahrenen Zustand erreichen bei optimaler Gestaltung die Enden der Verstärkungsleiste 44 zum gleichen Zeitpunkt den Umfang des auf der Wickelwelle 34 erzeugten Wickels aus der Rollobahn 31, wie dies in Fig. 4 durch die gestrichelte gezeichnete Verstärkungsleiste 44a schematisch angedeutet ist.

Ein Seitenfensterrollo für Kraftfahrzeuge weist eine Wickelwelle auf, die vorzugsweise hinter der Seitenverkleidung der Tür oder der B-Säule drehbar gelagert ist. Durch einen Schlitz in der Tür kann eine Rollobahn herausgezogen werden, die das Fenster abdeckt. Zu diesem Zweck greift an der Kante der Rollobahn, die den weitesten Weg zurücklegt, ein Betätigungsglied an. Das Betätigungsglied ist ein linienförmiges Element, das je nach Ausführung entweder zugfest ist oder drucksteif. Die Rollobahn selbst kann neben dem Fenster mit Hilfe wenigstens einer Führungsschiene oder ein oder zwei druck- oder biegesteifen Betätigungsgliedern aufgespannt gehalten werden.

## Patentansprüche

1. Seitenfensterrollo (30) für Kraftfahrzeuge, die wenigstens ein Seitenfenster (18) aufweisen, das von einer unteren etwa horizontal verlaufenden Fensterrahmenkante (24) und wenigstens einer seitlichen etwa senkrecht verlaufenden Fensterrahmenkante (25) begrenzt ist,
mit einer drehbar gelagerten kegelstumpfförmigen Wickelwelle (34),
mit einer Rollobahn (31), deren Zuschnitt zumindest in einem Abschnitt ihrer Längserstreckung zumindest angenähert der Form des Seitenfensters (18) entspricht und die einen umlaufenden Rollobahnrand aufweist, der einen Abschnitt bildet, der an der Wickelwelle (34) befestigt ist, sowie einen Abschnitt (43), der von der Wickelwelle (34) abliegt,
mit zwei Betätigungsgliedern (56), die mit dem von der Wickelwelle (34) abliegenden Abschnitt (43) des Rollobahnrands verbunden sind, und
mit Antriebsmitteln (34,55) zum kraftbetätigten Ein- und Ausfahren der Rollobahn, zu denen ein Getriebemotor (55) zum Bewegen der beiden Betätigungsglieder (56a,56b) gehört, der auf seiner Ausgangswelle zwei getrennte Zahnräder mit unterschiedlichem Durchmessern trägt, die an die unterschiedlichen Relativgeschwindigkeiten der beiden Betätigungsglieder angepasst ist.

2. Seitenfensterrollo nach Anspruch 1, **dadurch gekennzeichnet, dass** die Wickelwelle (34) etwa horizontal verlaufend unterhalb des Fensters (18) angeordnet ist.

3. Seitenfensterrollo nach Anspruch 1, **dadurch gekennzeichnet, dass** zwei Führungsschienen (45a,45b) vorgesehen sind, die in wenigstens einem Abschnitt ihrer Länge zumindest angenähert parallel zueinander verlaufen.

4. Seitenfensterrollo nach Anspruch 3, **dadurch gekennzeichnet, dass** die Führungsschienen (45) vertikal verlaufend angeordnet ist.

5. Seitenfensterrollo nach Anspruch 3, **dadurch gekennzeichnet, dass** die Führungsschienen (45) parallel zu der seitlichen Fensterrahmenkante (25) verläuft.

6. Seitenfensterrollo nach Anspruch 1, **dadurch gekennzeichnet, dass** es frei von Führungsschienen ist

7. Seitenfensterrollo nach Anspruch 1, **dadurch gekennzeichnet, dass** der Rollobahnrand zumindest in einem von der Wickelwelle (34) abliegenden Abschnitt (43) eine Randverstärkung (44,98) aufweist.

8. Seitenfensterrollo nach Anspruch 7, **dadurch gekennzeichnet, dass** die Randverstärkung (98) flexibel ist.

9. Seitenfensterrollo nach Anspruch 7, **dadurch gekennzeichnet, dass** die Randverstärkung (98) zumindest in einer Ebene biegesteif ist, die durch die aufgespannte Rollobahn (31) gebildet ist.

10. Seitenfensterrollo nach Anspruch 9, **dadurch gekennzeichnet, dass** zumindest ein Abschnitt der Randverstärkung (44) als Zugstange dient.

11. Seitenfensterrollo nach Anspruch 1 oder 12,**dadurch gekennzeichnet, dass** die Wickelwelle (34) gegenüber dem unteren Fensterrahmenkante (24) um ein Stück zurückversetzt ist, das der Erstreckung eines Abschnitts der Rollobahn (34) in Wickelrichtung entspricht, vorzugsweise der Projektion eines Abschnitts eines Teils der Randverstärkung (44) auf eine Gerade parallel zu der Wickelrichtung.

12. Seitenfensterrollo nach Anspruch 1, **dadurch gekennzeichnet, dass** eine Spriegel (76) vorhanden ist, der beidends in Führungsschienen (45a,45b) geführt ist.

13. Seitenfensterrollo nach Anspruch 12, **dadurch gekennzeichnet, dass** der Spriegel (76) teleskopisch längenverstellbar ist.

14. Seitenfensterrollo nach Anspruch 1, **dadurch gekennzeichnet, dass** zu dem Betätigungsmittel (56) zwei linienförmige Druckglieder (47) gehören, die vorzugsweise in einer Hülle (57a) drucksteif geführt ist.

15. Seitenfensterrollo nach Anspruch 1, **dadurch gekennzeichnet, dass** zu dem Betätigungsmittel (56) wenigstens zwei biegesteife Stangen (57) gehören, deren freie Enden mit dem Rollobahnrand verbunden ist und die in einer ortsfesten Führungseinrichtung (71) längsverschieblich geführt ist, wobei die Bewegungsrichtung im Wesentlichen rechtwinkelig zu der Achse der Wickelwelle (34) verläuft.

16. Seitenfensterrollo nach Anspruch 15, **dadurch gekennzeichnet, dass** die Stangen (57) mit dem linienförmigen Druckglied (57) gekoppelt ist, bzw. durch diese gebildet ist.

17. Seitenfensterrollo nach Anspruch 14, **dadurch gekennzeichnet, dass** die linienförmige Druckglieder (57) mit dem Spriegel (76) gekoppelt ist.

18. Seitenfensterrollo nach Anspruch 14, **dadurch gekennzeichnet, dass** die linienförmige Druckglied (57) zumindest an einem Ende mit einer Verzahnung (58) versehen ist, mittels derer die linienförmigen Druckglieder (57) formschlüssig mit einem zugehörigen Zahnrad (64) eines Antriebsmotors (55) gekuppelt sind.

19. Seitenfensterrollo nach Anspruch 1, **dadurch gekennzeichnet, dass** zu den Antriebsmitteln (39,55) eine Feder (39) gehört.

20. Seitenfensterrollo nach Anspruch 19, **dadurch gekennzeichnet, dass** die Feder (39) in Gestalt eines Federmotors mit der Wickelwelle (34) gekuppelt ist und die wickelwelle (34) in Aufrollrichtung der Rollobahn (31) vorspannt.

## Claims

1. Side window roller blind (30) for motor vehicles, which have at least one side window (18), which is delimited by a lower window frame edge (24) running approximately horizontally and at least one side window frame edge (25) running approximately perpendicularly,
with a rotatably mounted truncated cone-shaped winding shaft (34),
with a roller blind sheet (31), the blank of which corresponds at least approximately to the shape of the side window (18) at least in a section of its longitudinal extent and which has a circumferential roller blind sheet edge forming a section, which is fastened to the winding shaft (34), and also a section (43), which is remote from the winding shaft (34),
with two operating elements (56), which are connected to the section (43) of the roller blind sheet edge remote from the winding shaft (34), and
with drive elements (34, 55) for power-driven retraction and extension of the roller blind sheet, which include a geared motor (55) for moving the two operating elements (56a, 56b), which motor bears on its output shaft two separate gear wheels with different diameters, which is? adapted to the different relative speeds of the two operating elements.

2. Side window roller blind according to claim 1, **characterised in that** the winding shaft (34) is arranged to run approximately horizontally below the window (18).

3. Side window roller blind according to claim 1, **characterised in that** two guide rails (45a, 45b) are provided, which in at least one section of their length run at least approximately parallel to one another.

4. Side window roller blind according to claim 3, **characterised in that** the guide rails (45) are arranged to run vertically.

5. Side window roller blind according to claim 3, **characterised in that** the guide rails (45) run parallel to the side window frame edge (25).

6. Side window roller blind according to claim 1, **characterised in that** it has no guide rails.

7. Side window roller blind according to claim 1, **characterised in that** the roller blind sheet edge has an edge reinforcement (44, 98) at least in a section (43) remote from the winding shaft (34).

8. Side window roller blind according to claim 7, **characterised in that** the edge reinforcement (98) is flexible.

9. Side window roller blind according to claim 7, **characterised in that** the edge reinforcement (98) is pliant at least in a plane formed by the opened-out roller blind sheet (31).

10. Side window roller blind according to claim 9, **characterised in that** at least one section of the edge reinforcement (44) serves as a pull rod.

11. Side window roller blind according to claim 1 or 12, **characterised in that** in relation to the lower window frame edge (24) the winding shaft (34) is set back by a short distance corresponding to the extent of a section of the roller blind sheet (34) in the winding direction, preferably corresponding to the projection of a section of a part of the edge reinforcement (44) onto a straight line parallel to the winding direction.

12. Side window roller blind according to claim 1, **characterised in that** a holding rib (76) is provided, which is guided at both ends in guide rails (45a, 45b).

13. Side window roller blind according to claim 12, **characterised in that** the holding rib (76) is telescopically adjustable in length.

14. Side window roller blind according to claim 1, **characterised in that** the operating element (56) includes two linear pressing members (47), which are preferably guided in a casing (57a) to be pressure-resistant.

15. Side window roller blind according to claim 1, **characterised in that** the operating element (56) includes two bend-resistant rods (57), the free ends of which are connected to the roller blind sheet edge and which are disposed to be longitudinally displaceable in fixed guide means (71), wherein the direction of movement runs substantially at right angles to the axis of the winding shaft (34).

16. Side window roller blind according to claim 15, **characterised in that** the rods (57) are coupled to the linear pressing member (57) or are formed by this.

17. Side window roller blind according to claim 14, **characterised in that** the linear pressing members (57) are coupled to the holding rib (76).

18. Side window roller blind according to claim 14, **characterised in that** at least at one end the linear pressing members (57) are provided with a tooth system (58), by means of which the linear pressing members (57) are positively coupled to an associated gear wheel (64) of a drive motor (55).

19. Side window roller blind according to claim 1, **characterised in that** the drive elements (39, 55) include a spring (39).

20. Side window roller blind according to claim 19, **characterised in that** the spring (39) is coupled to the winding shaft (34) in the form of a spring motor and biases the winding shaft (34) in the roll-up direction of the roller blind sheet (31).

## Revendications

1. Store à enrouleur pour vitre latérale (30) destiné à des véhicules automobiles comportant au moins une vitre latérale (18) qui est délimitée par un côté de cadre de vitre (24) inférieur, sensiblement horizontal, et au moins un côté de cadre de vitre (25) latéral, sensiblement vertical,
comprenant un arbre d'enroulement (34) tronconique, monté tournant, comprenant une bande de store (31) dont la découpe correspond, au moins sur une partie de sa longueur, au moins approximativement à la forme de la vitre latérale (18), et qui présente un bord périphérique de bande de store, lequel forme une portion qui est fixée à l'arbre d'enroulement (34), ainsi qu'une portion (43) qui est éloignée de l'arbre d'enroulement (34),
comprenant deux éléments d'actionnement (56) qui sont reliés à la portion (43) du bord de bande de store qui est éloignée de l'arbre d'enroulement (34), et
comprenant des moyens d'entraînement (34, 55) pour enrouler et dérouler mécaniquement la bande de store, qui englobent un moto-réducteur (55) destiné à déplacer les deux éléments d'actionnement (56a, 56b) et portant sur son arbre de sortie deux roues dentées séparées de diamètres différents, qui sont adaptées aux vitesses relatives différentes des deux éléments d'actionnement.

2. Store à enrouleur pour vitre latérale selon la revendication 1, **caractérisé par le fait que** l'arbre d'enroulement (34) est disposé de façon sensiblement horizontale sous la vitre (18).

3. Store à enrouleur pour vitre latérale selon la revendication 1, **caractérisé par le fait qu'**il est prévu deux rails de guidage (45a, 45b) qui sont au moins à peu près parallèles l'un à l'autre, sur au moins une partie de leur longueur.

4. Store à enrouleur pour vitre latérale selon la revendication 3, **caractérisé par le fait que** les rails de guidage (45) sont disposés verticalement.

5. Store à enrouleur pour vitre latérale selon la revendication 3, **caractérisé par le fait que** les rails de guidage (45) sont parallèles au côté de cadre de vitre (25) latéral.

6. Store à enrouleur pour vitre latérale selon la revendication 1, **caractérisé par le fait qu'**il ne comporte pas de rails de guidage.

7. Store à enrouleur pour vitre latérale selon la revendication 1, **caractérisé par le fait que** le bord de bande de store présente un renfort de bord (44, 98), au moins dans une portion (43) éloignée de l'arbre d'enroulement (34).

8. Store à enrouleur pour vitre latérale selon la revendication 7, **caractérisé par le fait que** le renfort de bord (98) est souple.

9. Store à enrouleur pour vitre latérale selon la revendication 7, **caractérisé par le fait que** le renfort de bord (98) est rigide en flexion, au moins dans un plan qui est formé par la bande de store (31) déroulée.

10. Store à enrouleur pour vitre latérale selon la revendication 9, **caractérisé par le fait qu'**au moins une portion du renfort de bord (44) sert de barre de traction.

11. Store à enrouleur pour vitre latérale selon la revendication 1 ou 12, **caractérisé par le fait que** l'arbre d'enroulement (34) est décalé en arrière par rapport au côté de cadre de vitre (24) inférieur, d'une distance qui correspond à la longueur d'une portion de la bande de store (31) dans le sens d'enroulement, de préférence à la projection d'une portion d'une partie du renfort de bord (44) sur une droite parallèle au sens d'enroulement.

12. Store à enrouleur pour vitre latérale selon la revendication 1, **caractérisé par le fait qu'**il est prévu un arceau (76) qui est guidé avec ses deux extrémités dans des rails de guidage (45a, 45b).

13. Store à enrouleur pour vitre latérale selon la revendication 12, **caractérisé par le fait que** l'arceau (76) est réglable en longueur de façon télescopique.

14. Store à enrouleur pour vitre latérale selon la revendication 1, **caractérisé par le fait que** le moyen d'actionnement (56) comporte deux éléments de poussée (57) linéaires qui sont guidés de préférence de manière rigide en compression dans une gaine (57a).

15. Store à enrouleur pour vitre latérale selon la revendication 1, **caractérisé par le fait que** le moyen d'actionnement (56) comporte au moins deux tiges (57) rigides en flexion, dont les extrémités libres sont reliées au bord de bande de store, et qui sont guidées avec possibilité de coulissement longitudinal dans un dispositif de guidage e(71) fixe, le sens de déplacement étant sensiblement perpendiculaire à l'axe de l'arbre d'enroulement (34).

16. Store à enrouleur pour vitre latérale selon la revendication 15, **caractérisé par le fait que** les tiges (57) sont accouplées à l'élément de poussée (57) linéaire ou sont constituées par celui-ci.

17. Store à enrouleur pour vitre latérale selon la revendication 14, **caractérisé par le fait que** les éléments de poussée (57) linéaires sont accouplés à l'arceau (76).

18. Store à enrouleur pour vitre latérale selon la revendication 14, **caractérisé par le fait que** les éléments de poussée (57) linéaires sont pourvus, au moins à une extrémité, d'une denture (58) par laquelle les éléments de poussée (57) linéaires sont accouplés par complémentarité de formes à une roue dentée (64) associée d'un moteur d'entraînement (55).

19. Store à enrouleur pour vitre latérale selon la revendication 1, **caractérisé par le fait que** les moyens d'entraînement (39, 55) comprennent un ressort (39).

20. Store à enrouleur pour vitre latérale selon la revendication 19, **caractérisé par le fait que** le ressort (39) est accouplé sous la forme d'un moteur à ressort à l'arbre d'entraînement (34) et met l'arbre d'enroulement (34) sous précontrainte dans le sens de l'enroulement de la bande de store (31.)
